# FASCICULE DE BREVET EUROPEEN

(11) **EP 1 966 873 B1**
(45) Date de publication et mention de la délivrance du brevet: **06.02.2019**
(21) Numéro de dépôt: 06847129.1
(22) Date de dépôt: 22.12.2006
(51) Int. Cl.: H02K 5/22, H02K 11/33, H02K 23/66

(54) **MOTEUR ELECTRIQUE DE VEHICULE AUTOMOBILE ET PROCEDE DE MONTAGE ASSOCIE**
KRAFTFAHRZEUG-ELEKTROMOTOR UND DIESBEZÜGLICHES ANBRINGVERFAHREN
MOTOR VEHICLE ELECTRIC MOTOR AND ASSOCIATED METHOD OF MOUNTING

(30) Priorité: 26.12.2005 FR 0513327
(43) Date de publication de la demande: 10.09.2008
(73) Titulaire: Flex-N-Gate France, 25405 Audincourt (FR)
(72) Inventeur: PERA, Thierry, 90000 Belfort (FR); MAILLARD, Jérôme, 25190 Chamesol (FR)
(74) Mandataire: Lavoix
(86) Numéro de dépôt international: PCT/FR2006/002859
(87) Numéro de publication internationale: WO 2007/077359

(56) Documents cités:
- DE-A1- 19 824 342
- FR-A1- 2 777 136
- US-A1- 2004 012 279
- US-B1- 6 448 676

## Description

La présente invention concerne un moteur électrique de véhicule automobile selon le préambule de la revendication 1.

On connaît de US 2004/012279 A1 un moteur électrique du type précité.

On connaît de DE 198 24 342 A1 un moteur électrique dont le dispositif d'alimentation électrique est équipé d'un connecteur pour son raccord au boîtier principal.

On connaît de FR 2 777 136 un moteur électrique comportant une platine porte-balais présentant un surmoulage plastique entourant un insert et un radiateur du moteur.

Par le document FR-A-2 797 111 on connaît un moteur électrique comprenant une plaque porte-balais. Le moteur comprend en outre un dispositif d'alimentation électrique des balais qui comporte une carte électronique de commande portée par la plaque porte-balais.

La carte électronique s'étend sur un prolongement latéral de la plaque porte-balais. Elle déportée par rapport à l'axe du moteur pour des raisons d'encombrement stérique dans le moteur.

Un tel moteur ne donne pas entière satisfaction, notamment lorsqu'il est utilisé dans un environnement humide et/ou corrosif.

En effet, la carte électronique est disposée dans le boîtier principal du moteur contenant la plaque porte-balais. Les pistes électriques en cuivre et les composant électroniques présents sur la carte sont donc exposés à l'environnement moteur et se dégradent lorsque le moteur est utilisé dans un environnement humide et/ou corrosif.

En outre, la structure du boîtier principal doit être modifiée pour ménager un compartiment latéral destiné à accueillir la carte électronique.

Un but de l'invention est de fournir un moteur électrique dans lequel la dégradation des composants électroniques de commande est limitée, même dans un environnement humide et/ou hostile, sans modifier significativement la structure du boîtier principal, ni altérer la robustesse mécanique du moteur.

A cet effet, l'invention a pour objet un moteur selon la revendication 1.

Le moteur selon l'invention peut comprendre l'une ou plusieurs des caractéristiques des revendications 2 à 7.

L'invention a en outre pour objet un procédé de montage du moteur selon la revendication 8.

Le procédé de montage du moteur suivant l'invention peut comprendre la caractéristique de la revendication 9.

L'invention sera mieux comprise à la lecture de la description qui va suivre, donnée uniquement à titre d'exemple et faite en se référant aux dessins, sur lesquels :
- la Figure 1 est une vue de dessus d'un moteur selon l'invention, le capot du moteur étant ouvert ;
- la Figure 2 est une vue de dessus de la plaque porte-balais et de la carte électronique du moteur de la Figure 1 ;
- la Figure 3 est une vue en perspective de trois-quarts face du moteur de la Figure 1, les éléments représentés sur la Figure 2 ayant été enlevés ;
- la Figure 4 est une vue partielle en coupe suivant le plan vertical IV-IV de la Figure 3 ;
- la Figure 5 est une vue partielle en section suivant le plan vertical V-V de la Figure 1 ;
- la Figure 6 est une vue partielle en section suivant le plan vertical VI-VI de la Figure 1.

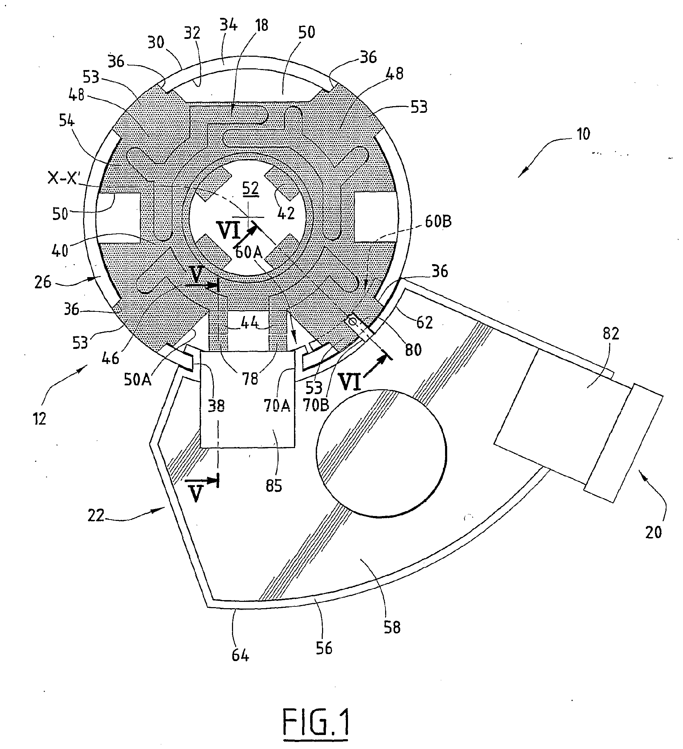

Le moteur électrique 10 à balais illustré par les Figures 1 à 6 est par exemple destiné à entraîner en rotation une hélice de ventilateur de véhicule automobile.

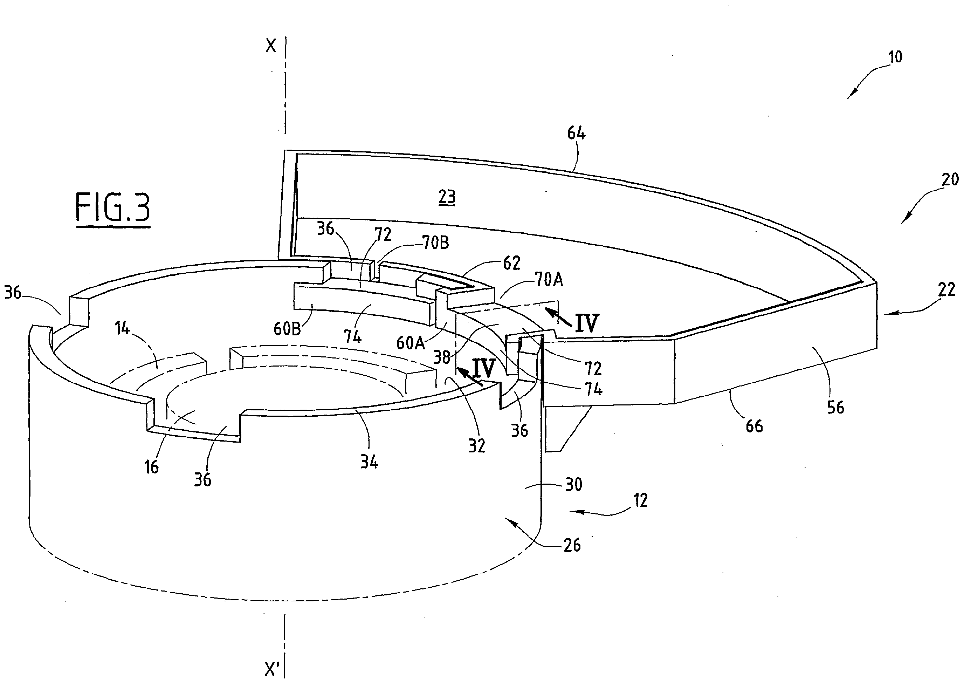

Le moteur 10 comprend un boîtier principal 12 visible sur les Figures 1 et 3. Il comporte des aimants permanents 14, un induit rotatif 16 et une plaque porte-balais 18, disposés dans le boîtier principal 12.

Le moteur 10 comprend en outre un dispositif 20 d'alimentation électrique comprenant un boîtier auxiliaire 22 fixé sur le boîtier principal 12. Le boîtier auxiliaire 22 délimite un volume intérieur 23 étanche qui contient une carte électronique 24 de commande.

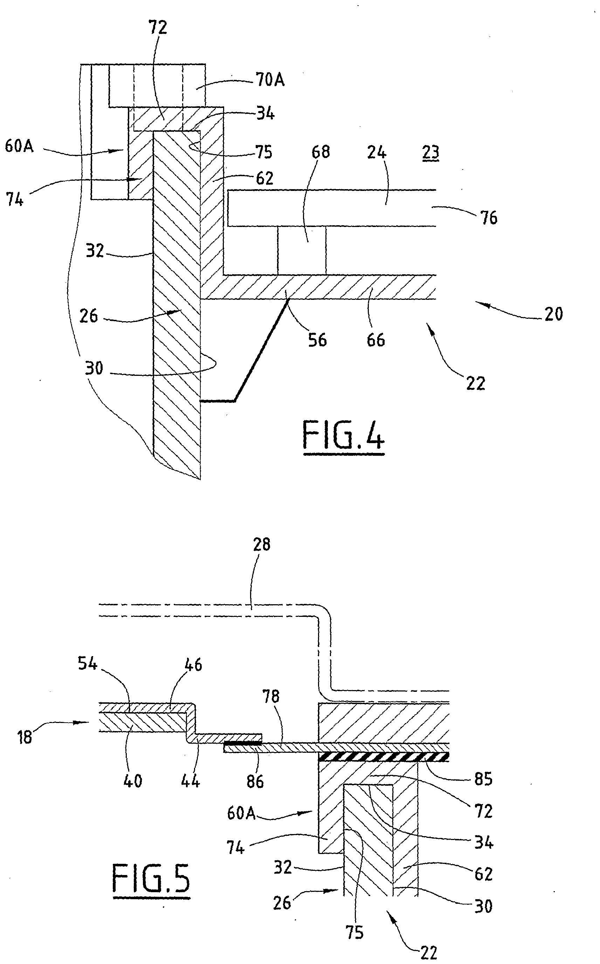

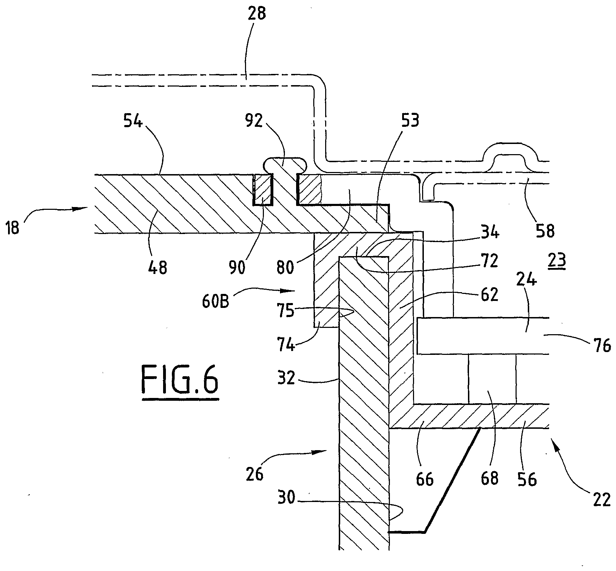

Le boîtier principal 12 du moteur comprend une carcasse 26 sensiblement cylindrique d'axe X-X' et un capot d'obturation 28 de la carcasse 26 représenté en pointillés sur les Figures 5 et 6.

La carcasse 26 présente une surface périphérique extérieure 30 sur laquelle s'appuie le boîtier auxiliaire 22, et une surface périphérique intérieure 32 reliées entre elles par une tranche 34 s'étendant dans l'épaisseur de la carcasse 26 le long d'un bord supérieur de cette carcasse 26.

La carcasse 26 délimite, dans la tranche 34, quatre encoches 36 de montage de la plaque porte-balais 18, réparties autour de l'axe X-X', et une encoche 38 de passage de connecteur ménagée en regard du boîtier auxiliaire 22.

Le capot moteur 28 couvre l'ouverture définie par le bord supérieur de la carcasse 26.

Comme on le verra plus bas, le capot 28 est appliqué sur le bord supérieur de la carcasse 26 pour maintenir le boîtier auxiliaire 22 en position.

Les aimants permanents 14 sont fixés sur la surface intérieure 32, sous la plaque porte-balais 18.

L'induit 16 est monté rotatif autour de l'axe X-X' en regard des aimants 14 et des balais portés par la plaque 18.

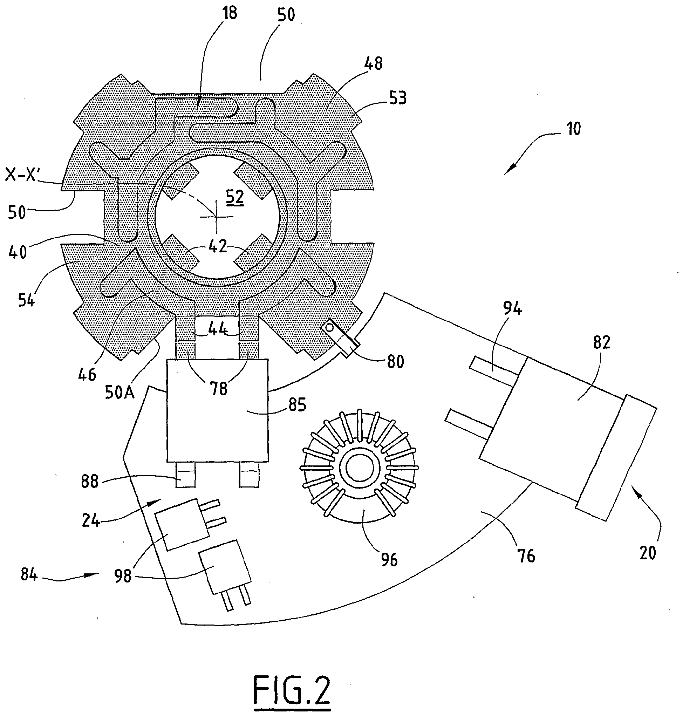

Comme illustré par la Figure 2, la plaque porte-balais 18 comprend une embase plane 40, quatre balais 42, deux languettes d'alimentation de phase 44 et des pistes 46 de cheminement électrique raccordant les languettes d'alimentation de phase 44 aux balais 42.

L'embase 40 comprend quatre ailes radiales 48 réparties autour de l'axe X-X' qui définissent entre elles des échancrures 50. L'embase 40 délimite une ouverture centrale 52 de passage de l'induit 16.

Chaque aile 48 comprend sur sa périphérie une dent 53 de montage de la plaque 18, reçue dans une encoche 36 de montage de forme correspondante.

Chaque balai 42 est fixé sur une surface inférieure de la base 40 en regard d'une aile 48.

Les pistes 46 sont disposées sur une surface supérieure 54 de la base 40 entre l'échancrure 50A située en regard de l'encoche 38 de passage et chaque balai 42. Elles sont réalisées à base de cuivre.

Les languettes d'alimentation de phase 44 font saillie radialement vers l'extérieur dans l'échancrure 50A s'ouvrant en regard de l'encoche 38 de passage de connecteur. Elles sont raccordées électriquement aux pistes 46.

Comme illustré par les Figures 1 et 3, le boîtier auxiliaire 22 comprend un réceptacle 56, un couvercle 58 de fermeture étanche du réceptacle 56 et deux pattes 60A, 60B de fixation du réceptacle 56 engagées sur la tranche 34 de la carcasse 26.

Le réceptacle 56 comprend une paroi intérieure d'appui 62 qui présente une surface d'appui de forme sensiblement complémentaire à la surface périphérique extérieure 30 de la carcasse 26. Il comprend en outre une paroi extérieure 64, et une paroi de fond 66.

En référence à la Figure 4, la paroi de fond 66 comprend des plots d'appui 68 qui font saillie vers le haut pour supporter et fixer la carte électronique 24 dans le boîtier auxiliaire 22.

Comme illustré par les Figures 5 et 6, la paroi intérieure 62 délimite des ouvertures horizontales 70A, 70B de passage de connecteur débouchant dans le réceptacle 56

Les ouvertures de passage 70A, 70B s'étendent respectivement en regard de l'encoche 38 de passage et d'une encoche 36 de montage adjacente.

Les pattes de fixation 60A, 60B présentent une section verticale sensiblement en forme de crochet. Elles font saillie vers l'axe X-X' par rapport à la paroi intérieure 62 respectivement au dessous des ouvertures respectives 70A et 70B.

Comme illustré par la Figure 4, chaque patte 60A, 60B comprend une partie supérieure 72 qui s'étend perpendiculairement à la paroi intérieure 62 dans une encoche 36, 38, et une plaque d'appui 74 qui s'étend en regard de la paroi intérieure 62 sur la surface périphérique intérieure 32 de la carcasse 26.

La paroi intérieure 62, la partie supérieure 72 et la plaque d'appui 74 délimitent entre elles une gorge 75 de réception de la tranche 34 de la carcasse cylindrique 26, de forme complémentaire à cette tranche 34.

Le volume intérieur 23 est délimité par la paroi intérieure 62, par la paroi extérieure 64, par le fond 66 et par le couvercle 58 inséré dans le réceptacle 56 avec interposition d'un joint d'étanchéité (non représenté).

Les ouvertures 70A, 70B de passage débouchent dans le volume intérieur 23.

Comme représenté sur la Figure 2, la carte électronique 24 comprend une plaque support 76, des languettes 78 de raccordement aux languettes d'alimentation de phase 44, et une patte de raccordement de masse 80. La carte électronique 24 comprend en outre une prise 82 de branchement d'un câble d'alimentation électrique, et une pluralité de composants électroniques de commande 84.

La plaque support 76 présente un contour sensiblement complémentaire au contour du volume intérieur 23 dans le réceptacle 56. Elle est disposée en appui sur les plots 68.

Les languettes de raccordement 78 sont noyées dans un bloc d'étanchéité 85 engagé de manière étanche dans l'ouverture de passage 70A. Le bloc 85 présente une forme complémentaire à celle de l'ouverture 70A.

Chaque languette de raccordement 78 présente une extrémité intérieure 86 qui fait saillie dans l'échancrure 50A à l'extérieur du volume 23, et une extrémité extérieure 88 soudée sur la plaque support 76 à l'intérieur du volume 23.

Comme illustré par la Figure 5, l'extrémité intérieure 86 est soudée sur une languette d'alimentation de phase 44 associée.

Ainsi, comme illustré par la Figure 2, la carte électronique 76 et le boîtier auxiliaire 22 sont raccordés mécaniquement et électriquement à la plaque porte-balais 18 par les languettes de raccordement 78 soudées sur des languettes de phases 44 correspondantes. Les languettes 78 et 44 forment ainsi un connecteur de raccordement électrique et mécanique de la plaque 18 au boîtier auxiliaire 22.

Comme illustré par la Figure 6, la patte de raccordement de masse 80 présente une extrémité intérieure 90 qui fait saillie vers la plaque porte-balais à travers l'ouverture 70B et l'encoche 36 de montage adjacente à l'encoche de passage 38. L'ouverture 70B présente une section verticale de forme complémentaire à la patte 80.

L'extrémité intérieure 90 est reçue dans un logement correspondant ménagé dans une aile 48 de la plaque porte-balais 18. Elle est fixée dans ce logement par une bouterolle 92.

La prise de raccordement 82 fait partiellement saillie à travers la paroi extérieure 64 du réceptacle 56. Elle est destinée à relier électriquement un cordon d'alimentation électrique du moteur 10 aux composants électroniques 84 par des cheminements 94 ménagés sur la plaque support 76.

Les composants 86 comprennent par exemple un transformateur électrique 96 et des composants 98 de type CMS destinés notamment à la régulation de la vitesse du moteur et/ou à l'antiparasitage.

Les composants 98 sont reliés d'une part, au transformateur 96 et d'autre part, aux languettes de raccordement 78 pour l'alimentation sélective des balais 42.

Le procédé de montage du moteur 10 selon l'invention va maintenant être décrit.

Initialement, les aimants 14 sont fixés sur la surface périphérique intérieure 32 et l'induit 16 est monté rotatif dans la carcasse 26.

Puis, le réceptacle 56 est monté sur la carcasse 26. A cet effet, les pattes de fixation 60A, 60B sont engagées sur la carcasse 26 à travers l'encoche 38 de passage et à travers une encoche 36 de montage adjacente. La tranche 34 de la carcasse 26 pénètre dans les gorges 75, jusqu'à ce qu'elle bute contre la paroi supérieure 72.

Dans cette configuration, la paroi intérieure 62 du réceptacle 56 est disposée en appui contre la surface périphérique extérieure 30 de la carcasse 26 et les pattes 60A, 60B coopèrent avec la tranche 34 dans les encoches 36, 38. Le réceptacle 56 est ainsi fixé angulairement autour de l'axe X-X'.

Ensuite, la carte électronique 24 portant la prise de raccordement 82, et les composants électronique 84 est disposée dans le réceptacle 56 en appui sur les plots 68.

Lors de cette étape, le bloc d'étanchéité 85 est engagé dans l'ouverture de passage 70A, et dans l'encoche de passage 38 en regard, en appui sur la partie supérieure 72 de la patte de fixation 60A, comme représenté sur la Figure 5.

Les extrémités intérieures 86 des languettes de raccordement 78 font alors saillie dans la carcasse 26. De même, la patte 80 de raccordement de masse est engagée dans l'encoche de montage 36 pour faire saillie dans la carcasse 26.

Puis, la plaque porte-balais 18 est insérée dans la carcasse 26. A cet effet, les dents 53 de montage sont placées dans les encoches 36 correspondantes pour bloquer en position la plaque porte-balais 18 autour de l'axe X-X'. La dent 53 en regard de la patte de raccordement de masse 80 est glissée sous cette patte 80.

Ensuite, les languettes de raccordement 78 sont soudées sur les languettes d'alimentation de phase 44, de sorte que la plaque porte-balais 18 et le réceptacle 22 sont raccordés électriquement et mécaniquement entre eux par les languettes 78, 44 à travers l'encoche 38 de passage.

La patte de raccordement 80 est alors appliquée contre la plaque porte-balais 18 en faisant pénétrer la bouterolle 92 dans une ouverture ménagée dans cette patte 80.

Ensuite, un joint d'étanchéité est interposé entre le réceptacle 56 et le couvercle 58 pour obturer de manière étanche le volume intérieur 23.

Ainsi, toute contamination du volume intérieur 23 par un milieu extérieur humide ou corrosif est évitée. La plaque support 76 et les composants 84 peuvent donc être réalisés à l'aide de matériaux de coût réduit, puisque ces éléments sont protégés de l'environnement extérieur dans le boîtier auxiliaire 22. Le coût du moteur est donc réduit.

Puis, pour maintenir en position le boîtier auxiliaire 22, le capot moteur 28 est serti sur le bord supérieur de la carcasse 26. Ainsi, comme illustré par les Figures 5 et 6, les dents de montage 53 de la plaque porte-balais 18, les parois supérieures 72 des pattes de fixation 60A, 60B et les languettes 44, 78 sont maintenues enserrées entre le capot moteur 28 et la tranche 34 de la carcasse 26. Le boîtier auxiliaire 22 est donc fixé de manière robuste sur le boîtier principal 12, par des moyens simples et peu onéreux.

Un cordon d'alimentation électrique peut alors être branché dans la prise 82 pour permettre l'alimentation électrique des balais 42 via la carte électronique 24, les languettes de raccordement 78, les languettes d'alimentation de phase 44, et les pistes de cheminement 46, pour entraîner en rotation l'induit 16 autour de l'axe X-X'.

## Revendications

1. Moteur électrique (10) de véhicule automobile, du type comprenant :
- un boîtier principal (12);
- une plaque porte-balais (18) disposée dans le boîtier principal (12) ou formant une paroi du boîtier principal (12) ;
- un dispositif (20) d'alimentation électrique, solidaire de la plaque porte-balais (18) comportant une carte électronique (24) de commande présentant au moins un connecteur (78, 44) de raccordement électrique à la plaque porte-balais (18) ;
dans lequel le dispositif d'alimentation électrique (20) comprend un boîtier auxiliaire (22) disposé à l'extérieur du boîtier principal (12), le boîtier auxiliaire (22) délimitant un volume intérieur (23) étanche aux liquides qui reçoit la carte électronique (24), le boîtier auxiliaire (22) étant relié mécaniquement à la plaque porte-balais (18) par le connecteur de raccordement électrique (78, 44) à travers une ouverture de passage (38) ménagée dans le boîtier principal (12), **caractérisé en ce que** le boîtier auxiliaire (22) comprend au moins une patte (60A, 60B) de fixation au boîtier principal (12) qui fait saillie à partir du boîtier auxiliaire (22), la patte de fixation (60A, 60B) étant distincte du ou de chaque connecteur de raccordement (78, 44), et **en ce qu'**au moins une patte de fixation (60A) est engagée dans l'ouverture de passage (38).

2. Moteur (10) selon la revendication 1, **caractérisé en ce que** le boîtier principal (12) comprend une paroi périphérique (26) entourant la plaque porte-balais (18) et définissant une tranche (34) dans son épaisseur, la ou chaque patte de fixation (60A, 60B) étant engagée sur la tranche (34).

3. Moteur (10) selon la revendication 2, **caractérisé en ce qu'**il comporte un capot de fermeture (28) fixé sur la paroi périphérique (26) et couvrant la plaque porte-balais (18), la ou chaque patte de fixation (60A, 60B) étant maintenue en position axialement sur la tranche (34) par enserrement entre le capot (28) et la tranche (34).

4. Moteur (10) selon l'une quelconque des revendications précédentes, **caractérisé en ce que** la plaque porte-balais (18) comprend une base (40), et pour le ou chaque connecteur (78, 44), un organe de raccordement électrique (44) qui fait saillie par rapport à la base (40), l'organe de raccordement électrique (44) de la plaque (18) étant rapporté sur un organe (78) de raccordement complémentaire de la carte électronique (24).

5. Moteur (10) selon la revendication 4, **caractérisé en ce que** l'organe de raccordement électrique (44) de la plaque (18) et l'organe de raccordement complémentaire (78) sont soudés entre eux.

6. Moteur (10) selon l'une quelconque des revendications précédentes, **caractérisé en ce que** le boîtier auxiliaire (22) présente une paroi d'appui (62) de forme sensiblement complémentaire à une surface périphérique (30) du boîtier principal (12).

7. Moteur (10) selon l'une quelconque des revendications précédentes, **caractérisé en ce que** le boîtier auxiliaire (22) s'étend latéralement par rapport à la plaque porte-balais (18), en regard de la plaque porte-balais (18).

8. Procédé de montage d'un moteur (10) selon l'une quelconque des revendications précédentes, **caractérisé en ce qu'**il comprend les étapes suivantes :
- insertion de la plaque porte-balais (18) dans le boîtier principal (12) et de la carte électronique (24) dans le boîtier auxiliaire (22); et
- fixation du boîtier auxiliaire (22) sur la plaque porte-balais (18) par raccordement mécanique du connecteur de raccordement (78, 44) à la plaque porte-balais (18) à travers l'ouverture de passage (80).

9. Procédé selon la revendication 8, prise en combinaison avec l'une des revendications 1 à 7, **caractérisé en ce qu'**il comprend, avant l'étape de fixation du boîtier auxiliaire (22), une étape d'engagement de la ou de chaque patte de fixation (60A, 60B) du boîtier auxiliaire (22) sur le boîtier principal (12).

## Patentansprüche

1. Elektrischer Motor (10) für ein Automobilfahrzeug, des Typs aufweisend:
- ein Hauptgehäuse (12),
- eine Bürstenhalterplatte (18), die in dem Hauptgehäuse (12) angeordnet ist oder die eine Wand des Hauptgehäuses (12) bildet,
- eine Vorrichtung (20) zur elektrischen Versorgung, die mit der Bürstenhalterplatte (18) fest verbunden ist und aufweist eine elektronische Steuer-Karte (24), die wenigstens ein Verbindungsstück (78, 44) zur elektrischen Verbindung der Bürstenhalterplatte (18) hat,
wobei die Vorrichtung zur elektrischen Versorgung (20) aufweist ein Hilfsgehäuse (22), das außerhalb des Hauptgehäuses (12) angeordnet ist, wobei das Hilfsgehäuse (22) ein inneres Volumen (23) begrenzt, das gegen Flüssigkeiten dicht ist und das die elektronische Karte (24) aufnimmt, wobei das Hilfsgehäuse (22) mechanisch verbunden ist mit der Bürstenhalterplatte (18) mittels des Verbindungsstücks zur elektrischen Verbindung (78, 44) durch eine Durchgangs-Öffnung (38) hindurch, die in dem Hauptgehäuse (12) ausgebildet ist, **dadurch gekennzeichnet, dass** das Hilfsgehäuse (22) aufweist wenigstens eine Lasche (60A, 60B) zur Fixierung an dem Hauptgehäuse (12), die von dem Hilfsgehäuse (22) aus vorsteht, wobei die Fixierungs-Lasche (60A, 60B) von dem oder jedem Verbindungsstück zur Verbindung (78, 44) verschieden ist, und dass wenigstens eine Fixierungs-Lasche (60A) in die Durchgangs-Öffnung (38) eingreift.

2. Motor (10) gemäß Anspruch 1, **dadurch gekennzeichnet, dass** das Hauptgehäuse (12) aufweist eine Umfangswand (26), die die Bürstenhalterplatte (18) abdeckt und die in ihrer Dicke einen Rand (34) definiert, wobei die oder jede Fixierungs-Lasche (60A, 60B) mit dem Rand (34) im Eingriff steht.

3. Motor (10) gemäß Anspruch 2, **dadurch gekennzeichnet, dass** er aufweist eine Verschluss-Haube (28), die an der Umfangswand (26) befestigt ist und die die Bürstenhalterplatte (18) abdeckt, wobei die oder jede Fixierungs-Lasche (60A, 60B) in axialer Position an dem Rand (34) gehalten ist durch Eingespannt-sein zwischen der Haube (28) und dem Rand (34).

4. Motor (10) gemäß irgendeinem der vorhergehenden Ansprüche, **dadurch gekennzeichnet, dass** die Bürstenhalterplatte (18) aufweist eine Basis (40) und für das oder jedes Verbindungsstück (78, 44) ein Organ zur elektrischen Verbindung (44), das bezüglich der Basis (40) vorsteht, wobei das Organ zur elektrischen Verbindung (44) der Platte (18) an einem komplementären Organ (78) zur Verbindung der elektronischen Karte (24) angebracht ist.

5. Motor (10) gemäß Anspruch 4, **dadurch gekennzeichnet, dass** das Organ zur elektrischen Verbindung (44) der Platte (18) und das komplementäre Organ zur Verbindung (78) aneinander geschweißt sind.

6. Motor (10) gemäß irgendeinem der vorhergehenden Ansprüche, **dadurch gekennzeichnet, dass** das Hilfsgehäuse (22) eine Auflagewand (62) einer Form im Wesentlichen komplementär zu einer Umfangsfläche (30) des Hauptgehäuses (12) hat.

7. Motor (10) gemäß irgendeinem der vorhergehenden Ansprüche, **dadurch gekennzeichnet, dass** das Hilfsgehäuse (22) sich bezüglich der Bürstenhalterplatte (18) seitlich, gegenüber der Bürstenhalterplatte (18) erstreckt.

8. Verfahren zur Montage eines Motors (10) gemäß irgendeinem der vorhergehenden Ansprüche, **dadurch gekennzeichnet, dass** es die folgenden Schritte aufweist:
- Einsetzen der Bürstenhalterplatte (18) in das Hauptgehäuse (12) und der elektronischen Karte (24) in das Hilfsgehäuse (22), und
- Fixieren des Hilfsgehäuses (22) an der Bürstenhalterplatte (18) durch mechanisches Verbinden des Verbindungsstücks zur Verbindung (78, 44) an der Bürstenhalterplatte (18) durch die Durchgangs-Öffnung (80) hindurch.

9. Verfahren gemäß Anspruch 8 in Kombination mit einem der Ansprüche 1 bis 7, **dadurch gekennzeichnet, dass** es aufweist, vor dem Schritt des Fixierens des Hilfsgehäuses (22), einen Schritt des In-Eingriff-Bringens der oder jeder Fixierungs-Lasche (60A, 60B) des Hilfsgehäuses (22) mit dem Hauptgehäuse (12).

## Claims

1. Electric motor (10) for a motor vehicle, of the type comprising:
- a main housing (12);
- a brush carrier plate (18) which is arranged in the main housing (12) or which forms a wall of the main housing (12);
- an electrical power supply device (20) which is fixedly joined to the brush carrier plate (18) and which comprises an electronic control board (24) which has at least one connector (78, 44) for electrical connection to the brush carrier plate (18);
the electrical power supply device (20) comprises an auxiliary housing (22) which is arranged at the outer side of the main housing (12), the auxiliary housing (22) delimiting an inner space (23) which is sealed with respect to liquids and which receives the electronic board (24), the auxiliary housing (22) being mechanically connected to the brush carrier plate (18) by means of the connector (78, 44) for electrical connection via a through-opening (38) which is provided in the main housing (12), wherein **characterised in that** the auxiliary housing (22) comprises at least one lug (60A, 60B) for fixing to the main housing (12) which protrudes from the auxiliary housing (22), the fixing lug (60A, 60B) being separate from the or each connection connector (78, 44), and **in that** at least one fixing lug (60A) is engaged in the through-opening (38).

2. Motor (10) according to claim 1, **characterised in that** the main housing (12) comprises a peripheral wall (26) which surrounds the brush carrier plate (18) and which defines a portion (34) over the thickness thereof, the or each fixing lug (60A, 60B) being engaged on the portion (34).

3. Motor (10) according to claim 2, **characterised in that** it comprises a closing cover (28) which is fixed to the peripheral wall (26) and which covers the brush carrier plate (18), the or each fixing lug (60A, 60B) being axially retained in position on the portion (34) by means of clamping between the cover (28) and the portion (34).

4. Motor (10) according to any one of the preceding claims, **characterised in that** the brush carrier plate (18) comprises a base (40) and, for the or each connector (78, 44), a means (44) for electrical connection which protrudes relative to the base (40), the electrical connection means (44) of the plate (18) being fitted to a complementary connection member (78) of the electronic board (24).

5. Motor (10) according to claim 4, **characterised in that** the electrical connection member (44) of the plate (18) and the complementary connection member (78) are welded together.

6. Motor (10) according to any one of the preceding claims, **characterised in that** the auxiliary housing (22) has a support wall (62) which has a shape which substantially complements a peripheral surface (30) of the main housing (12) .

7. Motor (10) according to any one of the preceding claims, **characterised in that** the auxiliary housing (22) extends laterally relative to the brush carrier plate (18), opposite the brush carrier plate (18).

8. Method for assembling a motor (10) according to any one of the preceding claims, **characterised in that** it involves the following steps:
- inserting the brush carrier plate (18) into the main housing (12) and inserting the electronic board (24) into the auxiliary housing (22); and
- fixing the auxiliary housing (12) to the brush carrier plate (18) by mechanically connecting the connection connector (78, 44) to the brush carrier plate (18) via the through-opening (80).

9. Method according to claim 8, taken in combination with any one of claims 1 to 7, **characterised in that** it comprises, prior to the step for fixing the auxiliary housing (22), a step for engaging the or each lug (60A, 60B) for fixing the auxiliary housing (22) to the main housing (12).
